# EUROPÄISCHE PATENTSCHRIFT

(11) **EP 1 637 280 B1**
(45) Veröffentlichungstag und Bekanntmachung des Hinweises auf die Patenterteilung: **16.05.2007**
(21) Anmeldenummer: 05108489.5
(22) Anmeldetag: 15.09.2005
(51) Int. Cl.: B23Q 39/04, B23Q 41/02

(54) **Montageeinrichtung**
Assembly device
Dispositif de montage

(30) Priorität: 18.09.2004 DE 202004014595 U
(43) Veröffentlichungstag der Anmeldung: 22.03.2006
(73) Patentinhaber: ZBV-Automation Berse + Elsas GmbH, 53842 Troisdorf (DE)
(72) Erfinder: Berse, Michael, Dipl.-Ing., 53773 Hennef (DE); Schöneberg, Wolfgang, 53567 Asbach (DE)
(74) Vertreter: Selting, Günther

(56) Entgegenhaltungen:
- DE-A1- 19 729 369
- DE-A1- 19 741 671
- DE-U1- 9 208 584
- DE-U1-5202004 001 87

## Beschreibung

Die Erfindung betrifft eine Montageeinrichtung mit mehreren in einer Längsrichtung aneinandersetzbaren Bearbeitungszellen, die durch eine Transportvorrichtung zum Transportieren von Werkstücken in Längsrichtung verbunden sind, wobei eine Bearbeitungszelle ein Basisgestell zum Tragen auswechselbarer Prozessmodule aufweist, welche mit einer Bearbeitungsvorrichtung eine Bearbeitung des Werkstücks vornehmen können.

Montageeinrichtungen dieser Art werden für vielfältige Montageaufgaben eingesetzt. In der Automobilindustrie werden sie zur Herstellung und Montage von Bauteilen und Baugruppen wie Stoßdämpfer, Sicherheitsgurtsysteme, Airbags oder Verriegelungen benutzt. In der Telekommunikationsindustrie werden Montageeinrichtungen eingesetzt, um Handybaugruppen, sowie elektrische und elektronische Kleinteile herzustellen. Ein weiteres Einsatzgebiet ist die Fertigung von Komponenten und Baugruppen für Haushalts- und Freizeitgeräte, sowie für optische und medizinische Geräte.

In DE 197 41 671 B4 ist ein Bearbeitungsplatz zur Bearbeitung eines Werkstücks mit einem Basismodul beschrieben, das eine Fördervorrichtung und mehrere nebeneinander liegende Aufnahmen aufweist, in die Prozessmodule eingeschoben werden Die Anzahl der Aufnahmen und die Größe der Prozessmodule ist festgelegt und nachträglich nicht erweiterbar. Werkstücke oberhalb einer bestimmten Größe können in dem Bearbeitungsplatz nicht bearbeitet werden.

In DE 20 2004 001 875 U1. ist eine modulare Bearbeitungsvorrichtung mit einem eine Werkstückfördervorrichtung aufweisenden Basismodul, das eine Aufnahme für ein Prozessmodul aufweist, beschrieben. An das Basismodul ist eine beliebige Anzahl von Werkstuckfördervorrichtungen aufweisenden Zusatzmodulen anreihbar, wobei die Zusatzmodule ebenfalls Aufnahmen für Prozessmodule aufweisen. Dadurch ist die Anzahl der Prozessmodule in der Bearbeitungsvorrichtung nachträglich erweiterbar. Die Größe der Prozessmodule und somit die Größe der bearbeitbaren Werkstücke ist begrenzt.

Der Erfindung liegt die Aufgabe zugrunde, eine Montageeinrichtung zu schaffen, die schnell und einfach an unterschiedliche Anforderungen bei der Werkstuckmontage bzw. -bearbeitung angepasst werden kann.

Die Lösung dieser Aufgabe erfolgt erfindungsgemäß durch die Montageeinrichtung mit den Merkmalen des Anspruchs 1. Das Prozessmodul weist eine die Bearbeitungsvorrichtung tragende Prozesstischplatte auf. Das Basisgestell weist mindestens eine Aufnahme für unterschiedliche Typen von Prozessmodulträgern auf, die jeweils eine Halterung zur Befestigung der Prozesstischplatten unterschiedlicher Prozessmodule aufweisen. Sowohl die Prozessmodule, als auch die Prozessmodulträger können einfach und schnell gewechselt werden, um unterschiedlichen Anforderungen bei der Werkstückbearbeitung zu genügen. Es stehen unterschiedliche Typen von Prozessmodulträgern zur Verfügung, die sich z.B. in Größe und Tragfähigkeit unterscheiden, so dass die Montageeinrichtung an unterschiedliche Größen und Gewichte der Werkstücke oder der Bearbeitungsvorrichtungen anpassbar ist.

Der Prozessmodulträger stützt sich derart an dem Basisgestell ab, dass der Rahmen des Basisgestells und der Prozessmodulträger einen in Längsrichtung durchgehenden Durchlass zumindest in Abschnitten der Länge umschließen. Zwischen Prozessmodulträger und Basisgestell entsteht dadurch ein frei nutzbarer Raum. In dem Durchlass kann eine weitere Prozesstischplatte zur Aufnahme einer Transportvorrichtung und/oder einer Bearbeitungsvorrichtung angeordnet sein. Z.B. kann auf der weiteren Prozesstischplatte eine Transportvorrichtung für die Rücktransportrichtung vorgesehen sein. Auf der weiteren Prozesstischplatte kann eine Bearbeitungsvorrichtung angeordnet sein, die die Werkstücke der darüber liegenden Transportvorrichtung von unten bearbeitet. Durch Kombination von Transportvorrichtung und Bearbeitungsvorrichtung auf der weiteren Prozesstischplatte können in dem Durchlass zusätzliche Prozesse untergebracht werden.

Das Basisgestell hat vorzugsweise auf einer ersten Seite und auf einer der ersten gegenüberliegenden zweiten Seite Aufnahmen für Prozessmodulträger. Insbesondere ist die erste Seite eine Hauptseite zur Bestückung mit Hauptprozessmodulträgern, die Bearbeitungsvorrichtungen und Transportvorrichtungen aufweisen, und die zweite Seite ist insbesondere eine Hilfsseite zur Bestückung mit Hilfsprozessmodulträgern, die Bearbeitungsvorrichtungen und/oder Transportvorrichtungen aufweisen. Auf der Hilfsseite kann eine Transportvorrichtung für den Rücktransport der Werkstücke vorgesehen sein. Einzelne Bearbeitungsvorrichtungen können auf der Hilfsseite zur Bearbeitung der Werkstücke auf der Hauptseite vorgesehen sein. Die Hilfsprozessmodulträger der Hilfsseite können mit Prozessmodulen bestückt werden, die Bearbeitungsvorrichtungen und Transportvorrichtungen aufweisen. Z.B. durch Verwendung eines Umlenkmoduls an einem Ende der Montageeinrichtung entsteht eine Hintransportrichtung der Werkstücke auf der Hauptseite und eine Rücktransportrichtung der Werkstücke auf der Hilfsseite.

Ein erster Prozessmodulträger, insbesondere ein Hilfsprozessmoduiträger, kann eine geringere Größe oder Höhe haben als ein zweiter Prozessmodulträger, insbesondere ein Hauptprozessmodulträger. Dadurch ist eine Bearbeitungszelle an unterschiedliche Werkstückhöhen oder unterschiedliche Höhen der Bearbeitungsvorrichtung anpassbar.

Die Prozessmodialträger der unterschiedlichen Typen von Prozessmodulträgern können unterschiedliche Abmessungen in Längsrichtung und in Breitenrichtung haben. Die Breitenrichtung ist die in einer horizontalen Ebene verlaufende Richtung quer zur Längsrichtung. Aus den unterschiedlichen Typen von Prozessmodulträgern mit unterschiedlicher Größe kann der zu der Größe und dem Gewicht des Werkstücks oder der Bearbeitungsvorrichtung passende ausgewählt und an den Aufnahmen des Basisgestells befestigt werden, ohne dass an dem Basisgestell Änderungen vorzunehmen sind. Das Auswechseln von Prozessmodulträgern zur Anpassung an individuelle Prozesse erfolgt schnell und einfach.

Zur Erhöhung der Tragfähigkeit kann mindestens ein Ende eines Prozessmodulträgers an dem das Basisgestell tragenden Boden abgestützt sein" Dadurch ist eine Bearbeitungszelle in Richtung der Breite beliebig erweiterbar. An einer Prozesstischplatte können mehrere Bearbeitungsvorrichtungen befestigt sein. Die Transportvorrichtung ist ebenfalls an der Prozesstischplatte befestigt.

Das Basisgestell ist an zwei gegenüberliegenden Stirnseiten von Stirnwänden abgeschlossen, wobei die Stirnwände einen Längsbalken stützen, der mit Abstand oberhalb des Basisgestells verläuft. Der Längsbalken bewirkt eine Längsversteifung im oberen Bereich und das Basisgestell eine Längsversteifung im unteren Bereich. Ferner können mehrere Typen von Stirnwänden mit jeweils unterschiedlicher Breite vorgesehen sein, die jeweils einen Rahmen um eine Durchtrittsöffnung bilden, wobei das Basisgestell zwei durch einen Längsbalken miteinander verbundene Stirnwände eines Typs aufweisen kann. Durch die Durchtrittsöffnung hindurch kann die Transportvorrichtung zum Werkstückträgertransport in eine benachbarte Bearbeitungszelle geführt werden. Aus den Typen von Stirnwänden mit jeweils unterschiedlicher Breite können der Breite der Prozessmodulträger angepasste Stirnwände ausgewählt werden. Der Längsbalken kann ein tragendes Element sein und der Befestigung von z.B. Schaltschränken oder Schwenkhauben dienen. In dem Längsbalken können Kabel geführt werden.

Die Bearbeitungszelle kann eine Schutzverkleidung mit mindestens einer unteren Schürze und mindestens einer oberen Schwenkhaube besitzen. Die Bearbeitungszelle kann durch die Schutzverkleidung vollständig geschlossen sein. Zum gezielten Schutz des Bedienpersonals kann auch nur eine Schürze oder Schwenkhaube vorgesehen sein, so dass die Bearbeitungszelle nicht zwangsläufig vollständig geschlossen sein muss. Vorzugsweise ist die obere Schwenkhaube an dem Längsbalken und die untere Schürze an dem Basisgestell und/oder an dem Prozessmodulträger befestigt.

An dem Basisgestell sind in Längsrichtung mehrere Prozessmodulträger hintereinander angeordnet. Jedem Prozessmodulträger ist mindestens ein Prozessmodul zugeordnet. Das Basisgestell besitzt einen in der Länge erweiterbaren oder verkürzbaren Rahmen durch Hinzufügen oder Entfernen von Teilen des Rahmens. Dadurch sind die Bearbeitungszellen in Längsrichtung individuell beliebig variierbar.

Die Bearbeitungszelle besitzt eine Einrichtung zur Energieversorgung, z.B. einen Schaltschrank mit einer Strom- bzw. Spannungsversorgung, und eine Einrichtung zur Steuerung der Prozessmodule, z.B. einen Schaltschrank mit einem Rechner zur Prozessdatenverarbeitung. Diese Einrichtungen sind vorzugsweise an dem Längsbalken befestigt. Jede Bearbeitungsvorrichtung kann zudem eine zusätzliche Steuereinheit aufweisen, die z.B. in dem Durchlass unterhalb der Prozesstischplatte befestigt ist.

An der Prozesstischplatte kann ein System zur Indexierung bzw. zum Schnelleinzug von Werkstückträgern angeordnet sein, das die Werkstückträger mit einem Mitnehmer greift und hält bzw. weiterbefördert. Das System zur Indexierung bzw. zum Schnelleinzug kann unterhalb der Prozesstischplatte angeordnet sein. In dem Basisgestell kann ein längslaufender Schlitz für den Mitnehmer vorgesehen sein.

Im Folgenden werden unter Bezugnahme auf die Figuren Ausführungsbeispiele der Erfindung beschrieben.

### Es zeigen:

- Figur 1: eine Explosionszeichnung einer perspektivischen Ansicht einer Montageeinrichtung,
- Figur 2: die Bearbeitungszelle nach Figur 1 im Querschnitt entlang der Linie II-II in Figur 1,
- Figur 3: ein zweites Ausführungsbeispiel einer Bearbeitungszelle im Querschnitt,
- Figur 4: ein drittes Ausführungsbeispiel einer Bearbeitungszelle im Querschnitt,
- Figur 5: ein viertes Ausführungsbeispiel einer Bearbeitungszelle im Querschnitt,
- Figur 6: ein fünftes Ausführungsbeispiel einer Bearbeitungszelle im Querschnitt,
- Figur 7: ein sechstes Ausführungsbeispiel einer Bearbeitungszelle im Querschnitt, und
- Figur 8: ein siebtes Ausführungsbeispiel einer Bearbeitungszelle im Querschnitt.

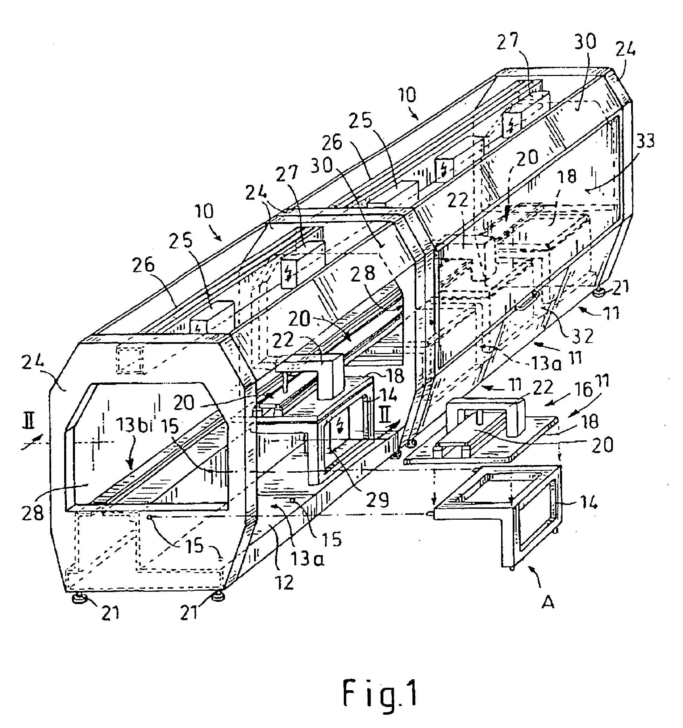

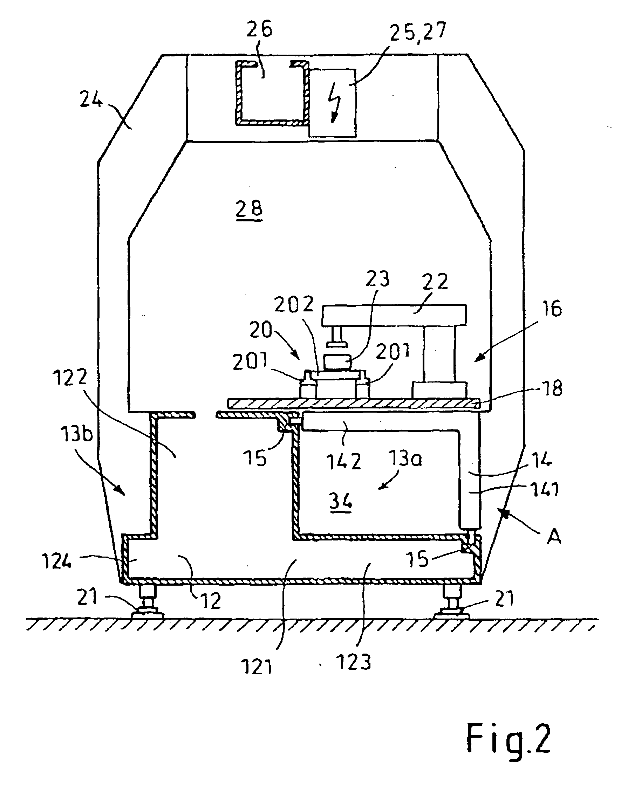

Figur 1 zeigt ein Ausführungsbeispiel einer Montageeinrichtung mit zwei Bearbeitungszellen 10. Jede Bearbeitungszelle 10 hat ein Basisgestell 12, Prozessmodulträger 14 und Prozessmodule 16. Das Basisgestell 12 besteht gemäß Figur 2 aus einem unteren horizontalen Teil 121 und einem davon aufragenden vertikalen Teil 122. Im Querschnitt bilden horizontaler und vertikaler Teil 121,122 die Form eines umgekehrten T. Ein Schenkel 123 des horizontalen Teils 121 ist länger als der andere Schenkel 124. Der Schenkel 123 weist zu der Hauptseite des Basisgestells 12, in Fig. 2 nach rechts. Der Schenkel 123 und der vertikale Teil 122 bilden eine Aufnahme 13a für einen Prozessmodulträger 14. Der kürzere Schenkel 124 weist zur der der Hauptseite gegenüberliegenden Hilfsseite, in Fig. 2 nach links. Der Schenkel 124 und der vertikale Teil 122 bilden eine Aufnahme 13b für z.B. einen Hilfsprozessmodulträger 14b. Zur Befestigung der Prozessmodulträger 14,14b hat die Aufnahme 13a,13b Befestigungseinrichtungen 15, z.B. in Form von Bohrlöchern, in die Schrauben der Prozessmodulträger 14 hineinpassen. Vorzugsweise dienen dieselben Löcher 15 einer Aufnahme 13a,13b zur Befestigung unterschiedlicher Typen von Prozessmodulträgern 14. Eine Aufnahme kann jedoch auch unterschiedliche Löcher 15 für unterschiedliche Prozessmodulträger besitzen.

Der Prozessmodulträger 14 ist von einem Typ A. Er bildet im Querschnitt die Form eines liegenden nach unten weisenden L und ist komplementär zu der Aufnahme 13a, so dass der Prozessmodulträger 14 und die Aufnahme 13a einen Durchlass 34 bilden. An den beiden Enden der beiden Schenkel des L-förmigen Prozessmodulträgers 14 sind die entsprechenden Gegenstücke, z.B. Schrauben, zu den Befestigungseinrichtungen 15 des Basisgestells 12 angeordnet.

Das Prozessmodul 16 besteht aus einer Prozesstischplatte 18, einer Transportvorrichtung 20 und einer Bearbeitungsvorrichtung 22. Die Transportvorrichtung 20 und die Bearbeitungsvorrichtung 22 sind derart auf der Prozesstischplatte 18 befestigt, dass die Bearbeitungsvorrichtung 22, die auf der Transportvorrichtung 20 befindlichen Werkstücke 23 bearbeiten kann. Die Bearbeitungsvorrichtung 22 kann dabei zum Ausführen eines Bearbeitungsschritts wie z.B. Nieten, Pressen, Kleben, Schrauben, Zuführen, Bohren, Fräsen, Schweißen oder Prüfen ausgebildet sein. Die Prozesstischplatte 18 ist auf dem Prozessmodulträger 14 z.B. durch eine Schraubverbindung befestigt. Die Verbindungen zwischen Prozessmodul 16 und Prozessmodulträger 14, sowie zwischen Prozessmodulträger 14 und Basisgestell 12 sind lösbar. Auf dem Basisgestell 12 sind zwei Prozessmodulträger 14 in Längsrichtung nebeneinander angeordnet. Jedes Prozessmodul 16 bildet eine Einheit, die als ganzes befestigt werden kann, und die auf einem Prozessmodulträger 14 angeordnet wird. Das Basisgestell 12 bietet somit die Möglichkeit, Bearbeitungsplätze 11 mit einem Prozessmodulträger 14 und einem Prozessmodul 16 einzurichten. Neben einem Bearbeitungsplatz 11 können jeweils weitere Bearbeitungsplätze angeordnet werden.

Das Basisgestell 12 hat auf dem Boden ruhende, die Bearbeitungszelle tragende Füße 21. An den beiden Stirnseiten des Basisgestells 12 ist jeweils eine Stirnwand 24 fest mit dem Basisgestell 12 verschraubt. Die Stirnwände 24 haben keine eigenen Standfüße und berühren nicht den Boden. Im oberen Bereich der Stirnwände 24 sind diese durch einen Längsbalken 26 miteinander verbunden. Der Längsbalken 26 und die Stirnwände 24 bilden eine tragende Struktur. In den Stirnwänden 24 ist jeweils eine Durchtrittsöffnung 28 ausgebildet, durch die Werkstücke 23 von der Transportvorrichtung 20 in die Bearbeitungszelle 10 hinein- bzw. aus ihr heraustransportiert werden. An dem Längsbalken 26 ist jeweils ein Schaltschrank 25 zur Strom- bzw. Spannungsversorgung der Bearbeitungszelle 10 sowie ein Schaltschrank 27 zur Steuerung der Bearbeitungszelle 10 befestigt. Einer Bearbeitungsvorrichtung 22 ist zusätzlich ein eigener, an der Unterseite der Prozesstischplattte 18 befestigter, Prozessschaltschrank 29 zur Steuerung der Bearbeitungsvorrichtung 22 zugeordnet.

Im oberen Bereich der Bearheitrangszelle 10 ist an dem Längsbalken 26 ein Kopfteil 30 der Schutzverkleidung befestigt. Unterhalb des Kopfteils 30 ist eine Schwenkhaube 33 als Teil der Schutzverkleidung vorgesehen und an dem Längsbalken 26 befestigt. Der untere Bereich der Bearbeitungszelle 10 ist mit einer Schürze 32 verkleidet. Die Schürze 32 ist an den Prozessmodulträgern 14 und an dem Basisgestell 12 befestigt.

Figur 2 zeigt den Prozessmodulträger 14 des Typs A und den von Basisgestell 12 und Prozessmodulträger 14 gebildeten Durchlass 34. Die Querschnittsdarstellung zeigt einen Vertikalträger 141 und einen dazu senkrechten Horizontalträger 142 des Prozessmodulträgers des Typs A. In dem Durchlass 34 können unter anderem zusätzliche Schaltschränke für die Steuerung der Bearbeitungsvorrichtung 22 angeordnet sein. Das Hohlprofil des Basisgestells 12 erstreckt sich über die gesamte Länge der Bearbeitungszelle 10. Die Bearbeitungszellen 10 sind in der Länge und in der Breite variierbar, ohne dass das Profil des Basisgestells 12 verändert wird. Das Basisgestell 12 kann durch Hinzufügen bzw. Entfernen von Teilen des Basisgestellrahmens in der Länge erweitert bzw. verkürzt werden. Die Transportvorrichtung 20 hat zwei synchron angetriebene Förderbänder 201, auf denen ein Werkstückträger 202 mit dem Werkstück 23 lose aufliegt. Der Werkstückträger 202 wird von den Förderbändern 201 transportiert.

Die folgenden Ausführungsbeispiele zeigen einen Bearbeitungsplatz 11, der durch verschiedene Prozessmodulträger 14 und Prozessmodule 16 auf einem jeweils unveränderten Basisgestell 12 variiert wird.

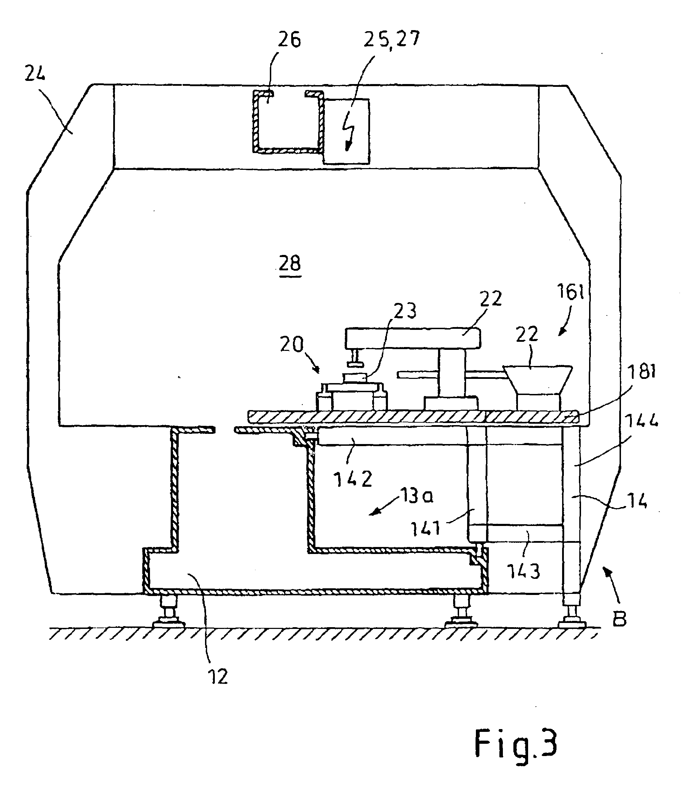

Das Ausführungsbeispiel in Figur 3 zeigt einen Prozessmodulträger 14 eines Typs B, der sich von dem des Typs A in der Querschnittsdarstellung durch einen zusätzlichen Horizontalträger 143 und einen zusätzlichen Vertikalträger 144 unterscheidet. Der Vertikalträger 144 ist zur Erhöhung der Tragfähigkeit des Prozessmodulträgers 14 mit einem Stützfuß 145 am Boden abgestützt ist. Der obere Horizontalträger 142 ist länger als der des Typs A. Der innere Vertikalträger 141 unterscheidet sich nicht von dem des Typs A. Gegenüber dem zuvor beschriebenen Ausführungsbeispiel in Figur 2 ist durch den verbreiterten Prozessmodulträger 14 des Typs B mehr Platz für ein größeres Prozessmodul 161 vorhanden. Das Prozessmodul 161 besitzt eine verbreiterte Prozesstischplatte 181, auf der neben der Transportvorrichtung 20 zwei Bearbeitungsvorrichtungen 22 angeordnet sind.

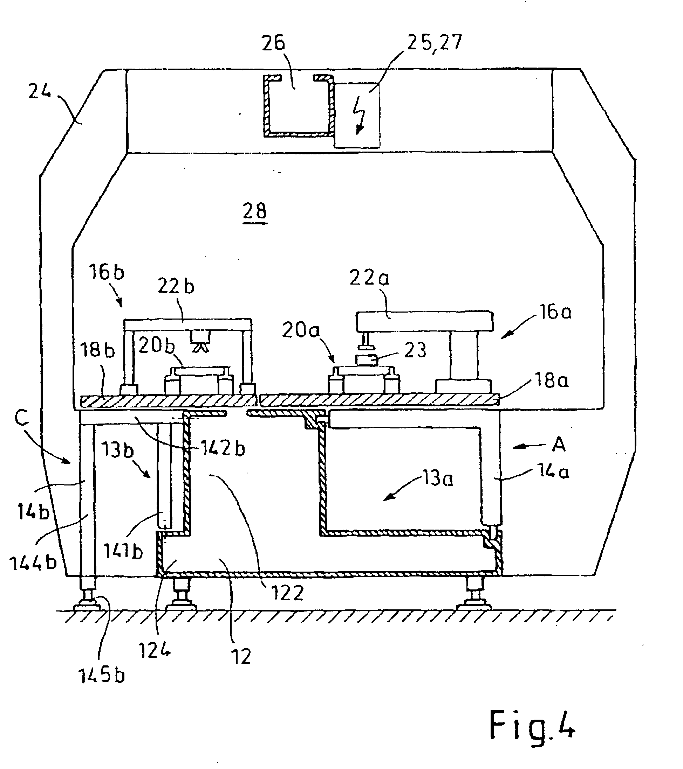

Das Ausführungsbeispiel in Figur 4 zeigt die Verwendung eines Hilfsprozessmodulträgers 14b eines Typs C. Der Hilfsprozessmodulträger 14b hat einen inneren Vertikalträger 141b, der auf dem kurzen Schenkel 124 des Basisgestells 12 abgestützt ist. Ein äußerer Vertikalträger 144b ist mit einem Stützfuß 145b zur Erhöhung der Tragfähigkeit des Hilfsprozessmodulträgers 14b am Boden abgestützt. Die beiden Vertikalträger 141b,144b sind an ihrem oberen Ende mit einem Horizontalträger 142b und senkrecht zu diesem verbunden. Der Horizontalträger 142b ist an dem vertikalen Teil des Basisgestells 12 abgestützt. Auf dem Hilfsprozessmodulträger 14b ist ein Prozessmodul 16b mit einer Prozesstischplatte 18b befestigt, auf der eine Transportvorrichtung 20b und eine Bearbeitungsvorrichtung 22b befestigt sind. Auf der dem Hilfsprozessmodulträger 14b gegenüberliegenden Seite des Basisgestells 12 ist der Hauptprozessmodulträger 14a des Typs A mit einem Prozessmodul 16a wie in Figur 2 befestigt. Auf diese Weise werden auf dem Basisgestell 12 zwei Transport- und Bearbeitungsstrecken erzeugt. Die Transportrichtungen beider Bearbeitungsstrecken können z.B. einander entgegengesetzt verlaufen, wobei die Transportvorrichtungen 20a und 20b an dem einen Ende der Montageeinrichtung durch ein Umlenkmodul miteinander verbunden sein können. Die beiden Prozesstischplatten 18a und 18b sind gleich groß.

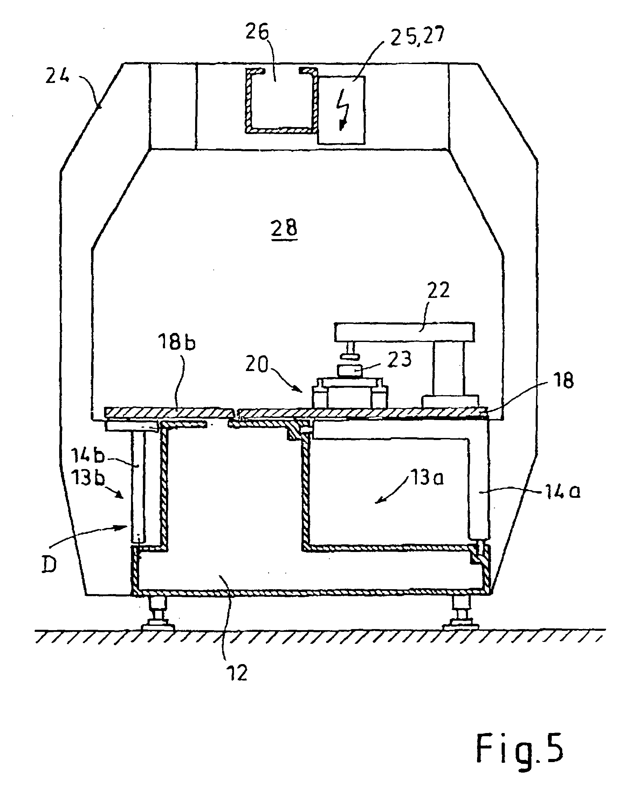

Figur 5 zeigt ein Ausführungsbeispiel mit einem im Querschnitt T-förmigen Hilfsprozessmodulträger 14b eines Typs D. Der Hilfsprozessmodulträger 14b ragt deutlich weniger weit über das Basisgestell 12 hinaus, als bei dem in Figur 4 gezeigten Ausführungsbeispiel und ist daher nicht am Boden abgestützt. Der Hilfsprozessmodulträger 14b trägt eine Prozesstischplatte 18b, die kleiner ist als die Prozesstischplatte 18a des Hauptprozessmodulträgers 14a und kann als Handarbeitsplatz zur manuellen Bearbeitung der Werkstücke 23, als Träger für eine Transportvorrichtung 20b, z.B. für den Rücktransport, oder als Träger für eine Bearbeitungsvorrichtung 22b, die Werkstücke der Haupttransportvorrichtung 20a bearbeitet, dienen.

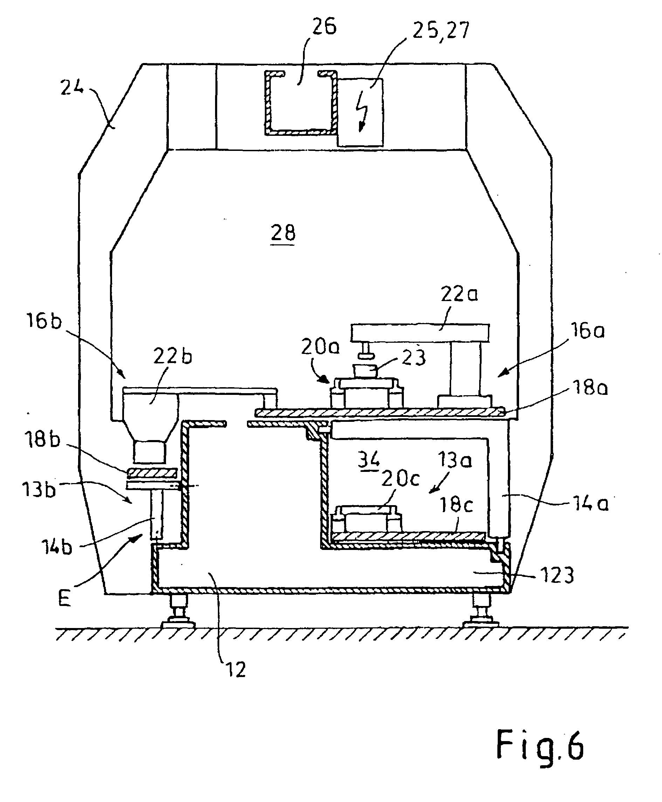

Das Ausführungsbeispiel in Figur 6 zeigt neben dem Hauptprozessmodulträger 14a und dem Hauptprozessmodul 16a einen in der Höhe reduzierten Hilfsprozessmodulträger 14b eines Typs E mit einem darauf befestigten Hilfsprozessmodul 16b. Die Hilfsprozesstischplatte 18b besitzt dieselbe Breite wie der Querträger des Hilfsprozessmodulträgers 14b. Auf der Hilfsprozesstischplatte 18b ist eine Hilfsbearbeitungsvorrichtung 22b befestigt, der über einen Greifarm Werkstücke 23 von der Haupttransportvorrichtung 20a zugeführt werden. In dem Durchlass 34 zwischen Basisgestell 12 und Hauptprozessmodulträger 14a befindet sich eine auf einer zusätzlichen Prozesstischplatte 18c befestigte Rücktransportvorrichtung 20c. Die Prozesstischplatte 18c ist an der Oberseite des langen Schenkels 123 des Basisgestells 12 befestigt. Die Haupttransportvorrichtung 20a und die Rucktransportvorrichtung 20c können z.B. an dem einen Ende der Montageeinrichtung durch ein Umlenkmodul miteinander verbunden sein. Die Bearbeitung der Werkstücke 23 findet lediglich auf der Haupttransportvorrichtung 20a und nicht auf der Rücktransportvorrichtung 20c statt. Diese dient lediglich zum Rücktransport der bearbeiteten Werkstücke 23, wobei die Werkstücke 23 in dem Durchlass 34 z.B. vor äußeren Einwirkungen geschützt sind.

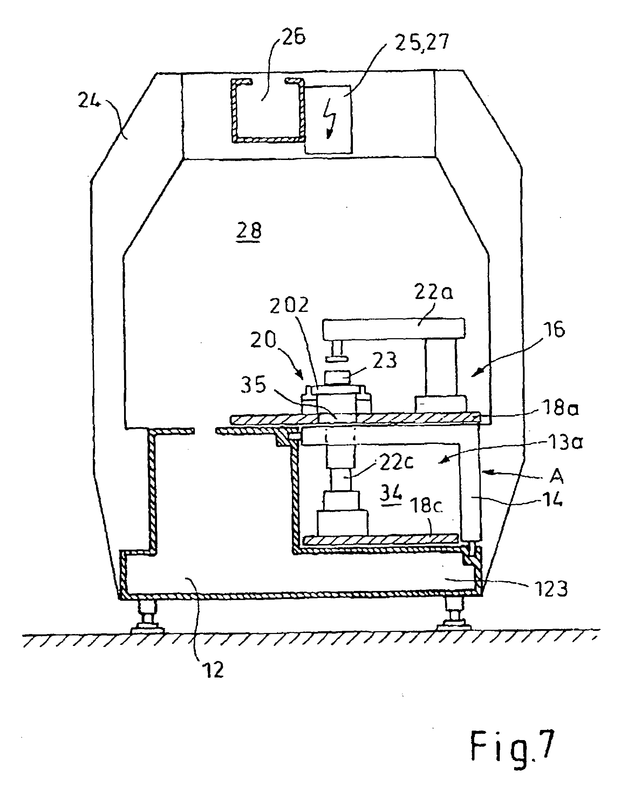

Das Ausführungsbeispiel in Figur 7 zeigt eine auf dem Prozessmodulträger 14 (Typ A) befestigte Prozesstischplatte 18a mit der Transportvorrichtung 20 und der Bearbeitungsvorrichtung 22a, sowie eine Bearbeitungsvorrichtung 22c in dem Durchlass 34. Die Bearbeitungsvorrichtung 22c befindet sich unter der Transportvorrichtung 20 und ist auf einer Prozesstischplatte 18c befestigt. Die Prozesstischplatte 18c ist an der Oberseite des langen Schenkels 123 des Basisgestells 1.2 angeordnet. Die Prozesstischplatte 18a hat unterhalb der Transportvorrichtung 20 ein Loch 35. Die Bearbeitungsvorrichtung 22c bearbeitet das Werkstück 23 von unten durch das Loch 35. Der Werkstückträger 202 kann ebenfalls ein Loch aufweisen, durch das eine Bearbeitung des Werkstücks 23 von unten erfolgt.

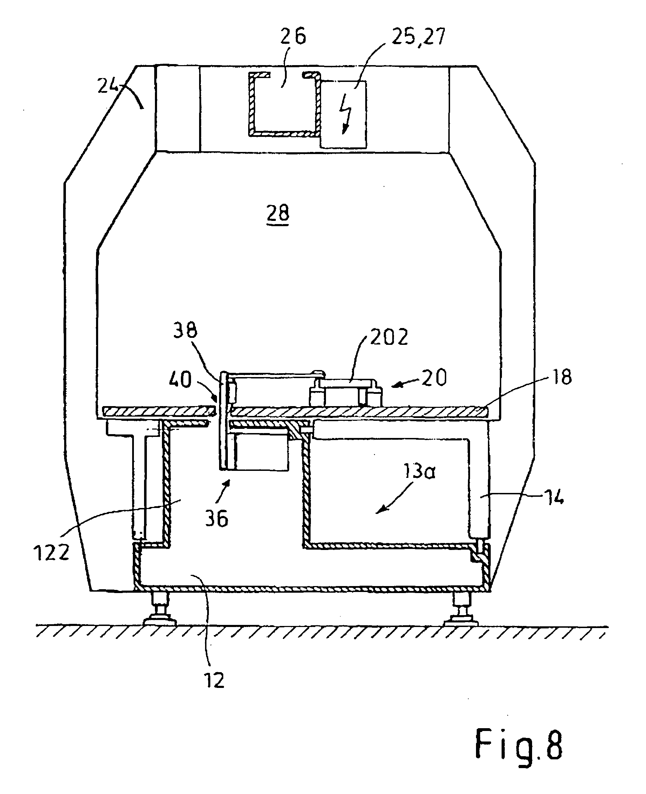

Figur 8 zeigt ein Ausführungsbeispiel der Verwendung eines Systems 36 zur Indexierung bzw. zum Schnelleinzug von Werkstücken. Das System 36 hat einen Mitnehmer 38, der ein Werkstück 23 von der Transportvorrichtung 20 greift und für die Bearbeitung durch eine Bearbeitungsvorrichtung 22 festhält oder zu einer Bearbeitungsvorrichtung 22 zur weiteren Bearbeitung weiterbefördert. Das System 36 ist unterhalb der Oberseite des vertikalen Teils 122 des Basisgestells 12 an dem Basisgestell 12 befestigt. In der Oberseite des vertikalen Teils 122 befindet sich ein in Längsrichtung verlaufender Schlitz 40, durch den der Mitnehmer 38 hindurchragt. Zusätzlich können Führungsschienen zur Führung des Werkstückträgers 202 vorgesehen sein, wobei der Werkstückträger 202 von dem Mitnehmer 38 entlang der Führungsschienen verschoben wird.

Die beschriebenen Ausführungsbeispiele zeigen lediglich Varianten der vielfältigen Kombinationsmöglichkeiten von Basisgestell 12, Prozessmodulträgern 14, Prozessmodufen 16, Prozesstischplatten 18, Transportvorrichtungen 20 und Bearbeitungsvorrichtungen 22.

## Patentansprüche

1. Montageeinrichtung mit mehreren in einer Längsrichtung aneinandersetzbaren Bearbeitungszellen (10), die durch eine Transportvorrichtung (20) zum Transportieren von Werkstücken (23) in Längsrichtung verbunden sind, wobei eine Bearbeitungszelle (10) ein Basisgestell (12) zum Tragen auswechselbarer Prozessmodule (16) aufweist, welche mit einer Bearbeitungsvorrichtung (22) eine Bearbeitung des Werkstücks (23) vornehmen können,
**dadurch gekennzeichnet,**
**dass** das Prozessmodul (16) eine die Bearbeitungsvorrichtung (22) tragende Prozesstischplatte (18) aufweist, und
**dass** das Basisgestell (12) mindestens eine Aufnahme (13a,13b) für unterschiedliche Typen von Prozessmodulträgern (14) aufweist, die jeweils eine Halterung zur Befestigung der Prozesstischplatten (18) unterschiedlicher Prozessmodule aufweisen.

2. Montageeinrichtung nach Anspruch 1, **dadurch gekennzeichnet, dass** sich der Prozessmodulträger (14) derart an dem Basisgestell (12) abstützt, dass der Rahmen des Basisgestells (12) und der Prozessmodulträger (14) einen in Längsrichtung durchgehenden Durchlass (34) umschließen.

3. Montageeinrichtung nach Anspruch 1 oder 2, **dadurch gekennzeichnet, dass** das Basisgestell (12) auf einer ersten Seite und auf einer der ersten gegenüberliegenden zweiten Seite Aufnahmen (13a,13b) für Prozessmodulträger (14) hat.

4. Montageeinrichtung nach Anspruch 3, **dadurch gekennzeichnet, dass** die erste Seite eine Hauptseite zur Bestückung mit Hauptprozessmodulträgern (14a) und die zweite Seite eine Hilfsseite zur Bestückung mit Hilfsprozessmodulträgern (14b) ist.

5. Montageeinrichtung nach Anspruch 4, **dadurch gekennzeichnet, dass** ein Hilfsprozessmodufträger (14b) eine geringere Größe hat als ein Hauptprozessmodulträger (14a).

6. Montageeinrichtung nach Anspruch 2, **dadurch gekennzeichnet, dass** in dem Durchlass (34) eine weitere Prozesstischplatte (18c) zur Aufnahme einer Transportvorrichtung (20c) und/oder einer Bearbeitungsvorrichtung (22c) angeordnet ist.

7. Montageeinrichtung nach einem der Ansprüche 1 bis 6, **dadurch gekennzeichnet, dass** Prozessmodulträger (14) der unterschiedlichen Typen unterschiedliche Abmessungen in Längsrichtung haben.

8. Montageeinrichtung nach einem der Ansprüche 1 bis 7, **dadurch gekennzeichnet, dass** Prozessmodulträger (14) der unterschiedlichen Typen quer zur Längsrichtung in einer horizontalen Ebene unterschiedliche Breiten haben.

9. Montageeinrichtung nach Anspruch 8, **dadurch gekennzeichnet, dass** mindestens ein Ende eines Prozessmodulträgers (14) zur Erhöhung der Tragfähigkeit zusätzlich an dem das Basisgestell tragenden Boden abgestützt ist.

10. Montageeinrichtung nach einem der Ansprüche 1 bis 9, **dadurch gekennzeichnet, dass** das Basisgestell (12) an zwei gegenüberliegenden Stirnseiten von Stirnwänden (24) abgeschlossen ist, wobei die Stirnwände (24) einen Längsbalken (26) stützen, der mit Abstand oberhalb des Basisgestells (12) verläuft.

11. Montageeinrichtung nach Anspruch 10, **gekennzeichnet durch** mehrere Typen von Stirnwänden (24) mit jeweils unterschiedlicher Breite, die jeweils einen Rahmen um eine Durchtrittsöffnung (28) bilden.

12. Montageeinrichtung nach einem der Ansprüche 1 bis 11, **dadurch gekennzeichnet, dass** die Bearbeitungszelle (10) eine Schutzverkleidung mit mindestens einer unteren Schürze (32) und mindestens einer oberen Schwenkhaube (33) besitzt.

13. Montageeinrichtung nach einem der Ansprüche 1 bis 12, **dadurch gekennzeichnet, dass** das Basisgestell (12) einen in der Länge erweiterbaren oder verkürzbaren Rahmen besitzt.

14. Montageeinrichtung nach einem der Ansprüche 1 bis 13, **dadurch gekennzeichnet, dass** die Transportvorrichtung (20) an der Prozesstischplatte (18) des Prozessmoduls (16) befestigt ist.

15. Montageeinrichtung nach einem der Ansprüche 1 bis 14, **dadurch gekennzeichnet, dass** an dem Basisgestell (12) in Längsrichtung mehrere Prozessmodulträger (14) hintereinander angeordnet sind.

16. Montageeinrichtung nach einem der Ansprüche 1 bis 15, **dadurch gekennzeichnet, dass** die Bear-beitungszelle (10) eine Einrichtung (25) zur Energieversorgung und eine Einrichtung (27) zur Steuerung der Prozessmodule (16) besitzt.

17. Montageeinrichtung nach einem der Ansprüche 1 bis 16, **dadurch gekennzeichnet, dass** auf einer Prozesstischplatte (18) mehrere Bearbeitungsvorrichtungen (22) befestigt sind.

18. Montageeinrichtung nach einem der Ansprüche 1 bis 17, **dadurch gekennzeichnet, dass** an der Prozesstischplatte (18) ein System (36) zur Indexierung bzw. zum Schnelleinzug von Werkstücken (23) angeordnet ist, das die Werkstücke (23) mit einem Mitnehmer (38) greift und hält bzw. weiterbefördert.

19. Montageeinrichtung nach Anspruch 18, **dadurch gekennzeichnet, dass** das System (36) zur Indexierung bzw. zum Schnelleinzug unterhalb der Prozesstischplatte (18) angeordnet ist und in dem Basisgestell (12) ein Schlitz (40) für den Mitnehmer (38) vorgesehen ist.

## Claims

1. An assembly device comprising a plurality of processing cells (10) adapted to be joined to each other in a longitudinal direction, said processing cells being connected by a transport means (20) provided to transport workpieces (23) in the longitudinal direction, a processing cell (10) comprising a base support (12) for carrying exchangeable process modules (16) adapted to process the workpiece (23) by use of a processing means (22),
**characterized in**
**that** the process module (16) comprises a process table plate (18) carrying the processing means (22),
**that** the base support (12) comprises at least one accommodation (13a, 13b) for different types of process module carriers (14) each provided with a mounting support for attachment of the process table plates (18) of different process modules.

2. The assembly device according to claim 1, **characterized in that** the process module carrier (14) is supported on the base support (12) in such a manner that the frame of the base support (12) and the process module carrier (14) enclose a longitudinally continuous passage (34).

3. The assembly device according to claim 1 or 2, **characterized in that** the base support (12) on a first side and on a second side opposite to the first side comprises accommodations (13a,13b) for process module carriers (14).

4. The assembly device according to claim 3, **characterized in that** said first side is a main side to be fitted with main process module carriers (14a), and said second side is an auxiliary side to be fitted with auxiliary process module carriers (14b).

5. The assembly device according to claim 4, **characterized in that** an auxiliary process module carrier (14b) has a smaller size than a main process module carrier (14a).

6. The assembly device according to claim 2, **characterized in that** the passage (34) has arranged therein a further process table plate (18c) provided to accommodate a transport means (20c) and/or a processing means (22c).

7. The assembly device according to any one of claims 1 to 6, **characterized in that** process module carriers (14) of different types have different sizes in the longitudinal direction.

8. The assembly device according to any one of claims 1 to 7, **characterized in that** process module carriers (14) of different types have different widths transversely to the longitudinal direction in a horizontal plane.

9. The assembly device according to claim 8, **characterized in that** at least one end of a process module carrier (14), for increasing its load supporting capability, is additionally supported on the bottom carrying the base support.

10. The assembly device according to any one of claims 1 to 9, **characterized in that** the base support (12) on two opposite end sides is closed by end walls (24), said end walls (24) supporting a longitudinal bar (26) extending at a distance above the base support (12).

11. The assembly device according to claim 10, **characterized by** a plurality of types of end walls (24) having respectively different widths, said end walls respectively forming a frame around a passage opening (28).

12. The assembly device according to any one of claims 1 to 11, **characterized in that** the processing cell (10) is provided with a protective cover comprising at least one lower skirt (32) and at least one upper pivotable hood (33).

13. The assembly device according to any one of claims 1 to 12, **characterized in that** the base support (12) comprises a frame adapted to have its length extended or shortened.

14. The assembly device according to any one of claims 1 to 13, **characterized in that** the transport means (20) is fastened to the process table plate (18) of the process module (16).

15. The assembly device according to any one of claims 1 to 14, **characterized in that** a plurality of process module carriers (14) are arranged serially in the longitudinal direction on the base support (12).

16. The assembly device according to any one of claims 1 to 15, **characterized in that** the processing cell (10) is provided with a means for energy supply (25) and a means (27) for controlling the process modules (16).

17. The assembly device according to any one of claims 1 to 16, **characterized in that** a process table plate (18) is provided with a plurality of processing means (22) fastened thereto.

18. The assembly device according to any one of claims 1 to 17, **characterized in that** the process table plate (18) has arranged thereon a system (36) for indexing and fast intake, respectively, of workpieces (23), said system being operative for gripping and holding the workpieces (23), and for conveying them, respectively, by an entrainment means (38).

19. The assembly device according to claim 18, **characterized in that** the system (36) for indexing and fast intake, respectively, is arranged below the process table plate (18) and that the base support (12) is provided with a slot (40) for the entrainment means (38).

## Revendications

1. Installation de montage comprenant plusieurs cellules de façonnage (10), qui peuvent être placées l'une contre l'autre dans une direction longitudinale et qui sont reliées par un dispositif de transport (20) destiné à transporter des pièces à traiter (23) en direction longitudinale, une cellule de façonnage (10) présentant un bâti de base (12) destiné à porter des modules de processus opératoire (16) interchangeables, qui peuvent réaliser un façonnage de la pièce à traiter (23) à l'aide d'un dispositif de façonnage (22),
**caractérisée**
**en ce que** le module de processus opératoire (16) présente un plateau de table de processus opératoire (18) portant le dispositif de façonnage (22), et
**en ce que** le bâti de base (12) présente au moins un logement de réception (13a, 13b) pour des modèles différents de supports de module de processus opératoire (14), qui présentent chacun une attache pour la fixation des plateaux de table de processus opératoire (18) de modules différents de processus opératoire.

2. Installation de montage selon la revendication 1, **caractérisée en ce que** le support de module de processus opératoire (14) s'appuie sur le bâti de base (12) d'une manière telle, que l'ossature du bâti de base (12) et le support de module de processus opératoire (14) entourent un passage (34) continu en direction longitudinale.

3. Installation de montage selon la revendication 1 ou 2, **caractérisée en ce que** le bâti de base (12) a des logements de réception (13a, 13b) pour des supports de module de processus opératoire (14) sur un premier flanc et sur un second flanc opposé au premier.

4. Installation de montage selon la revendication 3, **caractérisée en ce que** le premier flanc est un flanc principal destiné à être garni de supports principaux de module de processus opératoire (14a) et le second flanc est un flanc auxiliaire destiné à être garni de supports auxiliaires de module de processus opératoire (14b).

5. Installation de montage selon la revendication 4, **caractérisée en ce qu'**un support auxiliaire de module de processus opératoire (14b) est de plus petite taille qu'un support principal de module de processus opératoire (14a).

6. Installation de montage selon la revendication 2, **caractérisée en ce que** dans le passage (34) est disposé un plateau supplémentaire de table de processus opératoire (18c) destiné à recevoir un dispositif de transport (20c) et/ou un dispositif de façonnage (22c).

7. Installation de montage selon l'une des revendications 1 à 6, **caractérisée en ce que** des supports de module de processus opératoire (14) des modèles différents ont des dimensions différentes en direction longitudinale.

8. Installation de montage selon l'une des revendications 1 à 7, **caractérisée en ce que** des supports de module de processus opératoire (14) des modèles différents ont des largeurs différentes dans un plan horizontal, dans une direction transversale à la direction longitudinale.

9. Installation de montage selon la revendication 8, **caractérisée en ce qu'**au moins une extrémité d'un support de module de processus opératoire (14) est en plus en appui sur le sol supportant le bâti de base, afin d'accroître la capacité de charge.

10. Installation de montage selon l'une des revendications 1 à 9, **caractérisée en ce que** le bâti de base (12) se termine, au niveau de deux faces frontales opposées, par des parois frontales (24), les parois frontales (24) soutenant une poutre longitudinale (26), qui s'étend au-dessus du bâti de base (12), à distance de celui-ci.

11. Installation de montage selon la revendication 10, **caractérisée par** plusieurs modèles de parois frontales (24) de largeurs respectives différentes, qui définissent chacune un cadre autour d'une ouverture de traversée (28).

12. Installation de montage selon l'une des revendications 1 à 11, **caractérisée en ce que** la cellule de façonnage (10) possède un habillage protecteur comprenant au moins une jupe inférieure (32) et au moins un capot pivotant supérieur (33).

13. Installation de montage selon l'une des revendications 1 à 12, **caractérisée en ce que** le bâti de base (12) possède une ossature pouvant être agrandie ou raccourcie dans le sens de la longueur.

14. Installation de montage selon l'une des revendications 1 à 13, **caractérisée en ce que** le dispositif de transport (20) est fixé au plateau de table de processus opératoire (18) du module de processus opératoire (16).

15. Installation de montage selon l'une des revendications 1 à 14, **caractérisée en ce que** sur le bâti de base (12) sont disposés l'un à la suite de l'autre, en direction longitudinale, plusieurs supports de module de processus opératoire (14).

16. Installation de montage selon l'une des revendications 1 à 15, **caractérisée en ce que** la cellule de façonnage (10) comprend un dispositif (25) pour l'alimentation en énergie et un dispositif (27) pour la commande des modules de processus opératoire (16).

17. Installation de montage selon l'une des revendications 1 à 16, **caractérisée en ce que** plusieurs dispositifs de façonnage (22) sont fixés sur un plateau de table de processus opératoire (18).

18. Installation de montage selon l'une des revendications 1 à 17, **caractérisée en ce que** sur le plateau de table de processus opératoire (18) est disposé un système (36) d'indexation ou d'introduction rapide de pièces à traiter (23), qui saisit et maintient en place, respectivement fait avancer, les pièces à traiter (23) à l'aide d'un taquet entraîneur (38).

19. Installation de montage selon la revendication 18, **caractérisée en ce que** le système (36) d'indexation ou d'introduction rapide est disposé au-dessous du plateau de table de processus opératoire (18) et une fente (40) est prévue dans le bâti de base (12) pour le taquet entraîneur (38).
